(19) Europäisches Patentamt
European Patent Office
Office européen des brevets

(11) **EP 4 407 717 A1**

(12) **EUROPEAN PATENT APPLICATION**

(43) Date of publication:
**31.07.2024 Bulletin 2024/31**

(21) Application number: **24153699.4**

(22) Date of filing: **24.01.2024**

(51) International Patent Classification (IPC):
*H01M 4/62* (2006.01)          *H01M 4/66* (2006.01)
*H01M 10/0525* (2010.01)

(52) Cooperative Patent Classification (CPC):
**H01M 10/0525; H01M 4/622; H01M 4/623;
H01M 4/625; H01M 4/661; H01M 4/668**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.01.2023   JP 2023008963
23.01.2024   KR 20240010458**

(71) Applicant: **Samsung SDI Co., Ltd.
Yongin-si, Gyeonggi-do 17084 (KR)**

(72) Inventors:
• **TASHIRO, Yuta
Yokohama-shi (JP)**
• **YAMAMOTO, Hidekazu
Yokohama-shi (JP)**

(74) Representative: **Marks & Clerk LLP
15 Fetter Lane
London EC4A 1BW (GB)**

(54) **ELECTRODE FOR NON-AQUEOUS ELECTROLYTE RECHARGEABLE BATTERY AND NON-AQUEOUS ELECTROLYTE RECHARGEABLE BATTERY**

(57)     Provided are an electrode for a non-aqueous electrolyte rechargeable battery that has a base layer that can sufficiently suppress separation or peeling of the electrode mixture layer from the electrode current collector after being immersed in an electrolyte solution while reducing the thickness as much as possible. The electrode for a non-aqueous electrolyte rechargeable battery includes a current collector, an electrode mixture layer, and a conductive base layer between the current collector and the electrode mixture layer, wherein the base layer includes at least a styrene-acrylic acid ester-based copolymer, a carbon material, and poly(meth)acrylic acid, a content of the styrene-acrylic acid ester-based copolymer in the base layer is greater than or equal to about 70 mass% and less than or equal to about 90 mass%, in the poly(meth)acrylic acid, carboxyl groups included in the poly(meth)acrylic acid are not neutralized, or a proportion of neutralized carboxyl groups neutralized by alkali metal ions among the carboxyl groups is less than or equal to about 25%, and a weight per unit area of the electrode mixture layer per one surface of the current collector is greater than or equal to about 10 mg/cm$^2$ and less than or equal to about 35 mg/cm$^2$.

EP 4 407 717 A1

**Description**

## BACKGROUND OF THE INVENTION

**(a) Field of the Invention**

This disclosure relates to an electrode for a non-aqueous electrolyte rechargeable battery and a non-aqueous electrolyte rechargeable battery including the electrode.

**(b) Description of the Related Art**

Non-aqueous electrolyte rechargeable batteries, including lithium ion rechargeable batteries, are widely used as power sources for smart phones, notebook computers, and the like, but as these electronic devices become smaller and lighter, there is a need for rechargeable batteries to have even higher energy densities.

In addition, in recent years, demand as a power source for electric vehicles, hybrid vehicles, and the like has been increasing, and there is a demand for high energy density to ensure the same performance as conventional gasoline engines.

One example of a method for increasing an energy density of a rechargeable lithium ion battery is to increase a weight per unit area of the electrode mixture layer.

Normally, in the production of an electrode mixture layer, it is common to obtain the electrode mixture layer by coating an electrode mixture slurry on a thin current collector and drying it. However, if the weight per unit area of the electrode mixture layer is increased, a binder is likely to migrate to the surface, and the electrode mixture layer is likely to fall off or peel off from the current collector.

Accordingly, in the production of an electrode mixture layer with a large weight per unit area, a method of dry mixing and kneading an electrode mixture composition, forming it into a sheet using a calendar press, etc., and then bonding it to a current collector is also used. At this time, as a method of preventing the electrode mixture layer from falling off or peeling from the current collector, it is being considered to provide a conductive base layer between the current collector and the electrode mixture layer, as shown in Japanese Patent Publication No. 2020/196372 (Patent Document 1).

## SUMMARY OF THE INVENTION

However, the base layer is not a layer including an electrode active material and is a layer that does not contribute to improving an energy density of the battery. Therefore, in order to realize high energy density, it is required to make a thickness of the base layer thinner.

In addition, the present inventors, who further investigated peeling of the electrode mixture layer from a current collector foil, stated that in actual battery configuration, the electrode is immersed in an electrolyte solution and the electrode is used in a state in which the electrolyte solution is impregnated. After immersion, it has been found that the electrode mixture layer became easier to peel from the current collector than in the state before immersion in the electrolyte solution, especially in the case of the negative electrode mixture layer. On the other hand, in the above-mentioned Patent Document 1, there is no study at all about the falling off or peeling of the electrode mixture layer after immersion in the electrolyte solution.

The present invention has been made in view of the above-mentioned problems, and while making a thickness of the base layer as small as possible, a negative electrode for a non-aqueous electrolyte rechargeable battery has a base layer that can sufficiently prevent the electrode mixture layer from falling off or peeling off from the current collector even after immersion in an electrolyte solution in which the electrode mixture layer tends to fall off or peel off.

That is, some embodiments of the present disclosure are as follows.

[1] An electrode for a non-aqueous electrolyte rechargeable battery, including a current collector, an electrode mixture layer, and a conductive base layer between the current collector and the electrode mixture layer,

wherein the base layer includes at least a styrene-acrylic acid ester-based copolymer, a carbon material, and poly(meth)acrylic acid,
a content of the styrene-acrylic acid ester-based copolymer in the base layer is greater than or equal to about 70 mass% and less than or equal to about 90 mass%,
in the poly(meth)acrylic acid, carboxyl groups included in the poly(meth)acrylic acid are not neutralized, or a proportion of neutralized carboxyl groups neutralized by alkali metal ions among the carboxyl groups is less than or equal to about 25%, and

a weight per unit area of the electrode mixture layer per one surface of the current collector is greater than or equal to about 10 mg/cm$^2$ and less than or equal to about 35 mg/cm$^2$.

[2] The electrode for a non-aqueous electrolyte rechargeable battery described in [1], wherein a content of the styrene-acrylic acid ester-based copolymer in the base layer is greater than about 77.5 mass% and less than or equal to about 90 mass%.

[3] The electrode for a non-aqueous electrolyte rechargeable battery described in [1] or [2], wherein a content of the styrene-acrylic acid ester-based copolymer in the base layer is greater than or equal to about 78 mass% and less than or equal to about 90 mass%.

[4] The electrode for a non-aqueous electrolyte rechargeable battery described in any one of [1] to [3], wherein a content of the styrene-acrylic acid ester-based copolymer in the base layer is greater than or equal to about 78 mass% and less than or equal to about 88 mass%.

[5] The electrode for a non-aqueous electrolyte rechargeable battery described in any one of [1] to [4], wherein the base layer has a thickness of greater than or equal to about 0.5 μm and less than or equal to about 5 μm.

[6] The electrode for a non-aqueous electrolyte rechargeable battery described in any one of [1] to [5], wherein the base layer has a thickness of greater than or equal to about 0.5 μm and less than or equal to about 2 μm.

[7] The electrode for a non-aqueous electrolyte rechargeable battery described in any one of [1] to [6], wherein the styrene-acrylic acid ester-based copolymer has a glass transition temperature of greater than or equal to about -20 °C and less than or equal to about 20 °C.

[8] The electrode for a non-aqueous electrolyte rechargeable battery described in any one of [1] to [7], wherein the electrode mixture layer includes greater than or equal to about 0.5 mass% and less than or equal to about 10 mass% of polytetrafluoroethylene.

[9] The electrode for a non-aqueous electrolyte rechargeable battery described in any one of [1] to [8], wherein the carboxyl group in the poly(meth)acrylic acid is not neutralized, or a proportion of the neutralized carboxyl group in the poly(meth)acrylic acid is greater than about 0% and less than or equal to about 10%.

[10] The electrode for a non-aqueous electrolyte rechargeable battery described in any one of [1] to [9], wherein the carbon material includes at least one of furnace black, channel black, thermal black, ketjen black, and acetylene black.

[11] A non-aqueous electrolyte rechargeable battery comprising a positive electrode, a negative electrode, a separator, and an electrolyte, wherein at least one of the positive electrode and negative electrode is the electrode for the non-aqueous electrolyte rechargeable battery described in any one of [1] to [10].

At least some of the above and other features of the invention are set out in the claims.

According to the present disclosure, provided is a negative electrode for a non-aqueous electrolyte rechargeable battery having a base layer capable of sufficiently suppressing the falling-off or peeling of the electrode mixture layer even after immersion in an electrolyte solution in which falling-off or peeling of the electrode mixture layer is likely to occur, while keeping the thickness of the base layer as small as possible.

## DETAILED DESCRIPTION OF THE EMBODIMENTS

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

As used herein, "combination thereof" means a mixture, laminate, composite, copolymer, alloy, blend, reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

Hereinafter, a specific configuration of a non-aqueous electrolyte rechargeable battery according to an embodiment will be described.

<1. Basic Configuration of Non-aqueous Electrolyte Rechargeable Battery >

The non-aqueous electrolyte rechargeable battery according to some embodiments is a rechargeable lithium ion battery including a positive electrode, a negative electrode, a separator, and a non-aqueous electrolyte configured to accommodate them therein.

The shape of the rechargeable lithium ion battery is not particularly limited, but may be, for example, a cylindrical shape, a prismatic shape, a laminated shape, or a button shape.

(1-1. Positive Electrode)

The positive electrode includes a positive electrode current collector and a positive electrode mixture layer on the positive electrode current collector.

The positive electrode current collector may be any material as long as it is a conductor, and is, for example, plate-shaped or thin, and may be desirably made of aluminium, stainless steel, nickel coated steel, or the like.

The positive electrode mixture layer may include at least a positive electrode active material, and may further include a conductive agent and a positive electrode binder.

The positive electrode active material may be, for example, a transition metal oxide or a solid solution oxide including lithium, and is not particularly limited as long as it can electrochemically intercalate and deintercalate lithium ions. Examples of the transition metal oxide including lithium may include $Li_{1.0}Ni_{0.88}Co_{0.1}Al_{0.01}Mg_{0.01}O_2$, etc. In addition, further examples include Li·Co composite oxides such as $LiCoO_2$ and Li·Ni·Co-Mn-based composite oxides such as $LiNi_xCo_yMn_zO_2$, Li-Ni-based composite oxide such as $LiNiO_2$, or Li-Mn-based composite oxides such as $LiMn_2O_4$, and the like. Examples of the solid solution oxide may include $Li_aMn_xCo_yNi_zO_2$ ($1.150 \leq a \leq 1.430$, $0.45 \leq x \leq 0.6$, $0.10 \leq y \leq 0.15$, $0.20 \leq z \leq 0.28$), $LiMn_{1.5}Ni_{0.5}O_4$. On the other hand, a content (content ratio) of the positive electrode active material is not particularly limited, as long as it is applicable to the positive electrode mixture layer of a non-aqueous electrolyte rechargeable battery. Moreover, these compounds may be used alone or may be used in mixture of plural types.

The conductive agent is not particularly limited as long as it is for increasing the conductivity of the positive electrode. Specific examples of the conductive agent may include those including at least one selected from among carbon black, natural graphite, artificial graphite, fibrous carbon, and sheet-like carbon. Examples of the carbon black may include furnace black, channel black, thermal black, ketjen black, and acetylene black. Examples of the fibrous carbon may include carbon fiber and the like. Examples of the fibrous carbon may include carbon nanotubes and carbon nanofibers, and examples of the sheet-like carbon may include graphene and the like. The content of the conductive agent is not particularly limited, and may be any content applicable to the positive electrode mixture layer of a non-aqueous electrolyte rechargeable battery.

The positive electrode binder may be any material capable of binding the positive electrode active material and the conductive agent onto the positive electrode current collector, and is not particularly limited. The positive electrode binder may include, for example, a polyvinylidene difluoride (PVDF), polytetrafluoroethylene (PTFE), poly(meth)acrylic acid (polyacrylic acid (PAA) or polymethacrylic acid (PMA)), a styrene butadiene-based copolymer (SBR), a carboxylmethyl cellulose metal salt (CMC), and the like.

One type of binder may be used individually, or two or more types may be contained.

(1-2. Negative Electrode)

The negative electrode includes a negative electrode current collector and a negative electrode mixture layer on the negative electrode current collector.

The negative electrode current collector may be anything as long as it is a conductor, and may be desirably plate-shaped or thin, and made of copper, stainless steel, nickel-plated steel, or the like.

The negative electrode mixture layer may include a negative electrode active material, and may further include a conductive agent and a negative electrode binder.

The negative electrode active material is not particularly limited as long as it can electrochemically intercalate and deintercalate lithium ions, but, may be, for example, a graphite active material (artificial graphite, natural graphite, a mixture of artificial graphite and natural graphite, natural graphite coated with artificial graphite), a Si-based active material, or a Sn-based active material (e.g., a mixture of fine particles of silicon (Si) or tin (Sn) or a mixture of oxides thereof and a graphite active material, particulates of silicon or tin, an alloy including silicon or tin as a base material), a compound of metallic lithium and a titanium oxide such as $Li_4Ti_5O_{12}$, lithium nitride, and the like. As the negative electrode active material, one of the above examples may be used, or two or more types may be used in combination. On the other hand, oxides of silicon may be represented by $SiO_x$ ($0 \leq x \leq 2$).

The conductive agent is not particularly limited as long as it is for increasing the conductivity of the negative electrode, and, for example, the same conductive agent as described in the section of the positive electrode may be used.

The negative electrode binder may be, for example, a fluorine-containing resin such as polytetrafluoroethylene (PTFE) and polyvinylidene difluoride, an ethylene-containing resin such as a styrene-butadiene rubber, an ethylene propylene-diene terpolymer, an acrylonitile-butadiene rubber, a fluororubber, polyvinyl acetate, polymethylmethacrylate, polyethylene, polyvinyl alcohol, carboxymethyl cellulose, a carboxymethylcellulose derivative (a salt of carboxymethylcellulose, etc.), nitrocellulose, etc.

The negative electrode binder is not particularly limited as long as it is capable of binding the negative electrode active material and the conductive agent to the negative electrode current collector. From the viewpoint of increasing a weight per unit area of the negative electrode mixture layer, it is desirable that the negative electrode mixture layer includes a fluorine-containing resin such as polytetrafluoroethylene (PTFE) or polyvinylidene difluoride as a binder, and a binder content in the negative electrode mixture layer is greater than or equal to about 0.5 parts by mass (that is, mass%) and less than or equal to about 10 parts by mass. For example, the electrode mixture layer may include greater than or equal to about 0.5 mass% and less than or equal to about 10 mass% of polytetrafluoroethylene. If the binder content is within these ranges, a mechanical strength of the negative electrode mixture layer is improved to a level that can ensure good processability, and the energy density of the negative electrode plate can be increased.

(1-3. Separator)

The separator is not particularly limited, and any separator may be used as long as it is used as a separator for a rechargeable lithium ion battery. The separator may be a porous film, nonwoven fabric, or the like that exhibits excellent high-rate discharge performance alone or in combination. The resin constituting the separator may be, for example, a polyolefin-based resin such as polyethylene, polypropylene, etc., a polyester resin such as polyethylene terephthalate, polybutylene terephthalate, etc., polyvinylidene difluoride, a vinylidene difluoride-hexafluoropropylene copolymer, a vinylidene difluoride-perfluorovinyl ether copolymer, a vinylidene difluoride-tetrafluoroethylene copolymer, a vinylidene difluoride-trifluoroethylene copolymer, a vinylidene difluoride-hexafluoroacetone copolymer, a vinylidene difluoride-ethylene copolymer, a vinylidene difluoride-propylene copolymer, a vinylidene difluoride-trifluoropropylene copolymer, a vinylidene difluoride-tetrafluoroethylene copolymer, a vinylidene difluoride-hexafluoroethylene copolymer, a vinylidene difluoride-ethylene-tetrafluoroethylene copolymer, or the like. On the other hand, a porosity of the separator is not particularly limited, and it is possible to arbitrarily apply a porosity of the separator of a conventional rechargeable lithium ion battery.

On the surface of the separator, there may be a heat resistant layer including inorganic particles to improve heat resistance, or a layer including an adhesive for fixing the battery element by adhering to the electrode. The inorganic particles may include $Al_2O_3$, AlOOH, $Mg(OH)_2$, $SiO_2$, and the like. Examples of the adhesive may include a vinylidene fluoride-hexafluoropropylene copolymer, an acid-modified product of vinylidene fluoride polymers, and a styrene-(meth)acrylic acid ester copolymer.

(1-4. Non-aqueous Electrolyte)

As the non-aqueous electrolyte, the same non-aqueous electrolyte that has conventionally been used for rechargeable lithium ion batteries may be used without particular limitation. The non-aqueous electrolyte has a composition in which an electrolyte salt is included in a non-aqueous solvent, which is a solvent for the electrolyte. Examples of the non-aqueous solvent may include cyclic carbonate esters such as propylene carbonate, ethylene carbonate, butylene carbonate, chloroethylene carbonate, fluoroethylene carbonate, and vinylene carbonate, cyclic esters such as $\gamma$-butyrolactone and $\gamma$-valerolactone, chain carbonates such as dimethyl carbonate, diethyl carbonate, or ethylmethyl carbonate, chain esters such as methylformate, methylacetate, methylbutyrate, ethyl propionate, propyl propionate, ethers such as tetrahydrofuran or a derivative thereof, 1,3-dioxane, 1,4-dioxane, 1,2-dimethoxyethane, 1,4-dibutoxyethane, methyldiglyme, ethylene glycol monopropyl ether, or propylene glycol monopropyl ether, nitriles such as acetonitrile and benzonitrile, dioxolane or a derivative thereof, ethylene sulfide, sulfolane, sultone, or a derivative thereof, which may be used alone or in a mixture of two or more. On the other hand, when two or more types of non-aqueous solvents are mixed and used, a mixing ratio of each non-aqueous solvent may be a mixing ratio that may be used in a conventional rechargeable lithium ion battery.

Examples of the electrolyte salt may include an inorganic ion salt including one of lithium (Li), sodium (Na) or potassium (K) such as $LiClO_4$, $LiBF_4$, $LiAsF_6$, $LiPF_6$, $LiPF_{6-x}(C_nF_{2n+1})_x$ [provided that 1<x<6 and n=1 or 2], LiSCN, LiBr, LiI, $Li_2SO_4$, $Li_2B_{10}Cl_{10}$, $NaClO_4$, NaI, NaSCN, NaBr, $KClO_4$, KSCN, NaI, NaSCN, NaBr, $KClO_4$, KSCN, or an organic ion salt such as $LiCF_3SO_3$, $LiN(CF_3SO_2)_2$, $LiN(C_2F_5SO_2)_2$, $LiN(CF_3SO_2)(C_4F_9SO_2)$, $LiC(CF_3SO_2)_3$, $LiC(C_2F_5SO_2)_3$, $(CH_3)_4NBF_4$, $(CH_3)_4NBr$, $(C_2H_5)_4NClO_4$, $(C_2H_5)_4NI$, $(C_3H_7)_4NBr$, $(n-C_4H_9)_4NClO_4$, $(n-C_4H_9)_4NI$, $(C_2H_5)_4N$-maleate, $(C_2H_5)_4N$-benzoate, $(C_2H_5)_4N$-phthalate, lithium stearyl sulfonate, lithium octyl sulfonate), lithium dodecylbenzene sulfonate, and the like, and it is also possible to use these ionic compounds alone or in a mixture of two or more types. Meanwhile, a concentration of the electrolyte salt may be the same as that of a non-aqueous electrolyte used in a conventional rechargeable lithium ion battery, and is not particularly limited. In an embodiment, it is desirable to use a non-aqueous electrolyte including the above-described lithium compound (electrolyte salt) at a concentration of greater than or equal to about 0.8 mol/L and less than or equal to about 1.5 mol/L.

Meanwhile, various additives may be added to the non-aqueous electrolyte. Examples of such additives may include negative electrode-acting additives, positive electrode-acting additives, ester additives, carbonate ester additives, sulfuric acid ester additives, phosphoric acid ester additives, boric acid ester additives, acid anhydride additives, and electrolyte additives. Any one of these may be added to the non-aqueous electrolyte, and multiple types of additives may be added to the non-aqueous electrolyte.

<2. Characteristic Configuration of Non-aqueous Electrolyte Rechargeable Battery According to The Present Embodiment>

Hereinafter, the characteristic configuration of the non-aqueous electrolyte rechargeable battery according to an embodiment will be described.

(2-1. Base Layer)

The aforementioned negative electrode further includes a base layer. The base layer is provided between the negative electrode current collector and the negative electrode mixture layer, and prevents the negative electrode mixture layer from falling off or peeling off.

The base layer includes a carbon material, a binder (binder for base layer), and a dispersant.

The carbon material is not particularly limited as long as it is used to increase the conductivity of the base layer. Examples of the carbon material may include those containing one or more types selected from carbon black, natural graphite, artificial graphite, fibrous carbon, and nanocarbon materials. Examples of the carbon black may include furnace black, channel black, thermal black, ketjen black, and acetylene black.

Examples of the fibrous carbon include carbon fiber and the like.

Examples of the nanocarbon material may include carbon nanotubes, carbon nanofibers, single-layer graphene, and multi-layer graphene.

Among carbon materials, it is desirable to use carbon black, which is easy to disperse. Among carbon blacks, it is more desirable to use acetylene black, which has high conductivity.

A content of the carbon material in the base layer may be greater than or equal to about 5 mass% and less than or equal to about 29 mass%, and, for example, greater than or equal to about 6 mass% and less than or equal to about 27 mass%. When the content of the carbon material is greater than or equal to about 5 mass%, the conductivity of the base layer becomes good, and when the content of the carbon material is greater than or equal to about 6 mass%, the conductivity of the base layer becomes better. On the other hand, lowering the content of the carbon material leaves room for increasing the content of the binder and dispersant for the aforementioned base layer, which leads to the development of good adhesiveness and improved dispersibility of the base layer. Accordingly, the content of the carbon material may be less than or equal to about 29 mass%, less than or equal to about 27 mass%, and, for example, less than or equal to about 25 mass%.

The binder for the base layer binds each component, such as a carbon material included in the base layer, to each other and also binds the base layer and the negative electrode current collector or the negative electrode mixture layer. For example, the binder for the base layer according to this embodiment is a styrene-acrylic acid ester-based copolymer.

The styrene-acrylic acid ester-based copolymer refers to a copolymer in which the structural units of the copolymer are mainly formed by polymerizing styrene and acrylic acid ester. For example, the styrene-acrylic acid ester-based copolymer is a copolymer containing structural units of styrene and acrylic acid ester in a range of greater than or equal to about 80 mass% and less than or equal to about 99 mass%. The acrylic acid ester may include methyl acrylate, ethyl acrylate, butyl acrylate, isopropyl acrylate, octyl acrylate, 2-ethylhexyl acrylate, isobutyl acrylate, pentyl acrylate, n-hexyl acrylate, isoamyl acrylate, lauryl acrylate, stearyl acrylate, isobornyl acrylate, 2-hydroxyethyl acrylate, 2-hydroxypropyl acrylate, 2-hydroxybutyl acrylate, 2-hydroxy-3-phenoxypropyl acrylate, 2-acryloyloxyethyl-2-hydroxyethyl-phthalic acid, ethoxy-diethylene glycol acrylate, methoxy-triethylene glycol acrylate, tetrahydrofurfuryl acrylate, phenoxy-polyethylene glycol acrylate, phenoxydiethylene glycol acrylate, phenoxyethyl acrylate, methoxylethyl acrylate, glycidyl acrylate, acrylonitrile, 2-acrylamide-2-methylpropanesulfonic acid, 2-acryloxyethyl acid phosphate, and the like, and desirably butyl acrylate and 2-ethylhexyl acrylate.

The styrene-acrylic acid ester-based copolymer may include structural units other than styrene and acrylic acid ester in the range of greater than or equal to about 1 mass% and less than or equal to about 20 mass%.

The structural units included in the styrene-acrylic acid ester-based copolymer may include structural units obtained by polymerizing aromatic vinyl compounds such as p-methylstyrene, m-methylstyrene, o-methylstyrene, o-t-butylstyrene, m-t-butylstyrene, p-t-butylstyrene, p-chlorostyrene, and o-chlorostyrene; structural units obtained by polymerizing unsaturated methacrylic acid alkyl ester compounds such as methyl methacrylate, ethyl methacrylate, butyl methacrylate, isopropyl methacrylate, octyl methacrylate, 2-ethylhexyl methacrylate, isobutyl methacrylate, pentyl methacrylate, n-hexyl methacrylate, isoamyl methacrylate, lauryl methacrylate, stearyl methacrylate, and isobornyl methacrylate; structural units obtained by polymerizing (meth)acrylic acid-based compounds such as methacrylic acid, acrylic acid, itaconic acid, fumaric acid, and maleic acid; unsaturated carboxylic acid amide compounds such as (meth)acrylamide, (meth)N-methylacrylamide, (meth)N-dimethylacrylamide, (meth)N-hydroxymethylacrylamide, (meth)N-butoxymethylacrylamide, and (meth)isobutoxymethylacrylamide; and structural units obtained by polymerizing 2-hydroxyethyl methacrylate, 2-hydroxypropyl methacrylate, 2-hydroxybutyl methacrylate, 2-hydroxy-3-phenoxypropyl methacrylate, ethoxy-diethylene glycol methacrylate, methoxy-triethylene glycol methacrylate, tetrahydrofurfuryl methacrylate, phenoxy-polyethylene glycol methacrylate, phenoxydiethylene glycol methacrylate, phenoxyethyl methacrylate, methoxyethyl methacrylate, glycidyl methacrylate, methacrylonitrile, and 2-methacryloyloxyethyl acid phosphate.

A glass transition temperature of the styrene-acrylic acid ester-based copolymer may be less than or equal to about 20 °C and greater than or equal to about -20 °C. If the glass transition temperature is within this range, good adhesion can be obtained even if the temperature of the hot roll press when adhering the negative electrode mixture layer to the base layer is not set to an excessively high temperature, for example, exceeding about 120 °C. The glass transition temperature of the styrene-acrylic acid ester-based copolymer may be greater than or equal to about -15 °C and less than or equal to about 15 °C, and, for example, greater than or equal to about -10 °C and less than or equal to about 15 °C.

The glass transition temperature of the styrene-acrylic acid ester-based copolymer can be adjusted depending on the type and content of the copolymer's structural units. Because the styrene-acrylic acid ester-based copolymer may include greater than or equal to about 80 mass% and less than or equal to about 99 mass% of structural units obtained by polymerizing styrene and acrylic acid ester, the glass transition temperature can be adjusted by the content of styrene and acrylic acid ester. For example, because the glass transition temperature of styrene homopolymer is about 100 °C, and the glass transition temperature of 2-ethylhexyl acrylate homopolymer is about -55 °C, by adjusting the contents of styrene and 2-ethylhexyl acrylate, a copolymer having a glass transition temperature between about -55 °C and about 100 °C may be synthesized. In addition, if the glass transition temperature of the homopolymer of the monomers used is already known, the calculated glass transition temperature may be obtained using Fox's equation from the volume fraction of these monomer compounds, and by synthesizing a copolymer referring to this and performing differential scanning calorimetry (DSC), a styrene-acrylic acid ester-based copolymer with a glass transition temperature of greater than or equal to about - 20 °C and less than or equal to about 20 °C can be obtained.

In order to sufficiently prevent the negative electrode mixture layer from falling off or peeling after being immersed in the electrolyte solution by the base layer, a content of the binder for the base layer in the base layer is greater than or equal to about 70 mass%. In addition, in order to sufficiently ensure the conductivity of the base layer, the content of the binder for the base layer in the base layer is less than or equal to about 90 mass%. The content of the binder for base layer in the base layer may be greater than about 77.5 mass% and less than or equal to about 90 mass%, greater than or equal to about 78 mass% and less than or equal to about 88 mass%, greater than or equal to about 78 mass% and less than or equal to about 85 mass%, greater than or equal to about 80 mass% and less than or equal to about 85 mass% and, for example, greater than or equal to about 78 mass% and less than or equal to about 83 mass%.

The dispersant is used to uniformly disperse the carbon material and the binder for the base layer, and in this embodiment, poly(meth)acrylic acid corresponds to this.

The poly(meth)acrylic acid has a plurality of carboxyl groups in the molecule, and these carboxyl groups may be neutralized by alkali metal ions such as sodium ions.

In the poly(meth)acrylic acid used in this embodiment, it is desirable that these carboxyl groups are as unneutralized as possible. For example, a proportion of neutralized carboxyl groups (neutralized carboxyl groups) among the carboxyl groups included in poly(meth)acrylic acid may be less than or equal to about 25%, less than or equal to about 20%, less than or equal to about 10%, and, for example, 0% (i.e., unneutralized), in particular, greater than about 0% and less than or equal to about 10%.

A content of the dispersant in the base layer may be greater than or equal to about 1 mass% and less than or equal to about 25 mass%, and, for example, greater than or equal to about 2 mass% and less than or equal to about 20 mass%. If the content of the dispersant is greater than or equal to about 1 mass%, the above-described carbon material and the binder for the base layer can be uniformly dispersed, and when the content of the dispersant is greater than or equal to about 2 mass%, they can be dispersed more uniformly. On the other hand, lowering the content of the dispersant leaves room for increasing the content of the aforementioned binder for the base layer and conductive agent, which leads to improved battery performance by developing good adhesion of the base layer and lowering the resistance. Accordingly, the content of the dispersant may be less than or equal to about 25 mass%, less than or equal to about 20 mass%, and, for example, less than or equal to about 15 mass%.

<3. Manufacturing Method of Non-aqueous Electrolyte Rechargeable Battery According to an Embodiment>

Hereinafter, the manufacturing method of the non-aqueous electrolyte rechargeable battery according to the present embodiment is described.

(3-1. Manufacturing Method of Positive Electrode)

The positive electrode is produced as follows.
The positive electrode mixture layer may be manufactured by, for example, mixing a positive electrode active material, a conductive agent, and a positive electrode binder in a desired ratio, kneading the mixture to produce a positive electrode mixture, pressing the positive electrode mixture to produce a positive electrode mixture sheet, and laminating the positive electrode mixture sheet on a positive electrode current collector by heat pressing or the like.
Additionally, a positive electrode mixture layer may be formed by mixing the materials constituting the positive electrode mixture layer and dispersing them in a solvent for positive electrode slurry to produce a positive electrode slurry, coating this positive electrode slurry on a positive electrode current collector, and drying it. In this case, the formed positive electrode mixture layer may be pressed to a desired density using a press machine.

(3-2. Manufacturing Method of Negative Electrode)

The negative electrode is produced as follows.
First, each component included in the aforementioned base layer is suspended in a solvent such as water to prepare a base layer slurry in a slurry state, and this base layer slurry is coated and dried on a negative electrode current collector to form a base layer. At this time, a coating amount of the base layer slurry is such that the thickness of the base layer after drying may be, for example, greater than or equal to about 0.5 $\mu$m and less than or equal to about 5 $\mu$m. The thickness of the base layer after drying may be greater than or equal to about 0.5 $\mu$m and less than or equal to about 2 $\mu$m, and, for example, greater than or equal to about 0.5 $\mu$m and less than or equal to about 1.5 $\mu$m. Meanwhile, the method of coating is not particularly limited. The coating method may include a knife coater method, a gravure coater method, a reverse roll coater, a slit die coater, and the like. Each of the following coating processes may be also performed by the same method.
Next, the negative electrode active material, the conductive agent, and the negative electrode binder are mixed in a desired ratio, kneaded to produce a negative electrode mixture and this negative electrode mixture is pressed to produce a negative electrode mixture sheet. The negative electrode is produced by a dry method in which this negative electrode mixture sheet is laminated on the base layer using a hot roll press or the like. On the other hand, the manufacturing equipment used in the process of laminating the negative electrode mixture sheet to the base layer by a dry method is not particularly limited. As manufacturing equipment used in the process of laminating the negative electrode mixture sheet to the base layer, roll press equipment, hot roll press equipment, dry laminator, calendar processing equipment, heat press equipment, etc. may be considered. In the above laminating process, for example, when using a hot roll press equipment, the press roll temperature of the hot roll press equipment can be appropriately changed depending on the material used in the negative electrode mixture layer, etc., but may be greater than or equal to about 20 °C and less than or equal to about 150 °C, greater than or equal to about 40 °C and less than or equal to about 120 °C, and, for example, greater than or equal to about 60 °C and less than or equal to about 100 °C. Moreover, the rotation speed of the press roll may be greater than or equal to about 0.1 m per minute and less than or equal to about 10 m per minute, greater than or equal to about 0.1 m per minute and less than or equal to about 5 m per minute, and, for example, greater than or equal to about 0.1 m per minute and less than or equal to about 1.0 m per minute. Various parameters, including the temperature of the press roll and the rotational speed of the press roll, may have different desirable ranges depending on the hot roll press equipment used, and the parameters may be adjusted depending on each hot roll press equipment. When laminating the negative electrode mixture sheets, the weight per unit area of the negative electrode mixture layer on one surface of the negative electrode current collector is adjusted to be greater than or equal to about 10 mg/cm$^2$ and less than or equal to about 35 mg/cm$^2$.
Additionally, a negative electrode slurry is prepared by dispersing a mixture of the materials constituting the negative electrode mixture layer in a solvent for the negative electrode slurry. Next, a negative electrode mixture layer may be formed by coating the negative electrode slurry onto the negative electrode current collector and drying it. When forming the negative electrode mixture layer by coating and drying in this way, the negative electrode mixture layer may be pressed using a press machine to obtain the desired density described above.

(3-3. Manufacturing Method of Non-aqueous Electrolyte Rechargeable Battery)

Next, an electrode structure is manufactured by placing a separator between the positive electrode and the negative electrode. Then, the electrode structure may be processed into a desired shape (e.g., cylindrical shape, prismatic shape, laminated shape, button shape, etc.) and inserted into a container of the above shape. Subsequently, a non-aqueous electrolyte is inserted into the corresponding container to impregnate the electrolyte into each pore in the separator or a gap between the positive electrode and negative electrode. Accordingly, a rechargeable lithium ion battery is manufactured.

<4. Effect by the Present Embodiment>

According to the non-aqueous electrolyte rechargeable battery configured as above, high energy density of the non-aqueous electrolyte rechargeable battery is achieved by increasing the weight per unit area of the negative electrode mixture layer and reducing the thickness of the base layer as much as possible and falling off and/or peeling of the negative electrode mixture layer from the current collector after immersion in the electrolyte solution may be sufficiently suppressed.

<5. Another Embodiment>

The present disclosure is not limited to the aforementioned embodiments.
In the above-described embodiment, the case where the base layer is formed only on one surface of the negative electrode current collector has been described, but the base layer and the negative electrode mixture layer may be provided on both surfaces of the negative electrode current collector.
In the above embodiment, the case where the base layer is provided between the negative electrode current collector and the negative electrode mixture layer has been described. However, the base layer according to the present disclosure is installed between the positive electrode current collector and the positive electrode mixture layer, and can prevent the positive electrode mixture layer from falling off or peeling.
The base layer according to the present disclosure is not limited to non-aqueous electrolyte rechargeable batteries that do not have a solid electrolyte layer, but can also be applied to semi-solid rechargeable batteries or all-solid rechargeable batteries that have a solid electrolyte layer.
In addition, the present invention is not limited to these embodiments but may be variously modified without deviating from the purpose.

[Examples]

Hereinafter, the present invention will be described in more detail according to specific examples. However, the following examples are only one example of the present invention, and the present invention is not limited to the following examples.

<Preparation of Base Layer Slurry>

Acetylene black as a carbon material, polyacrylic acid as a dispersant, and aqueous dispersion of an acrylic acid ester-based copolymer (a glass transition temperature: 15 °C, measured by DSC (X-DSC7000, Hitachi High Tech Science Corporation)) as a binder for a base layer were respectively used to form base layer slurry with a composition shown in Table 1 or 2.
As a procedure, the carbon material and the dispersant were first mixed for 20 minutes by using a disperser, and then, this mixed solution was subjected to a high pressure dispersion treatment by using a NanoVator manufactured by Yoshida Industrial Machinery Co., Ltd. The high pressure dispersion treatment was three times repeated to obtain an acetylene black dispersion. On the other hand, when this acetylene black dispersion was dried into a solid at 120 °C and weighed, a dried solid content (a solid concentration) of the acetylene black dispersion was about 8 mass%.
Subsequently, this acetylene black dispersion with the above aqueous dispersion of the binder at a solid concentration of 40% was added to a stirring container, which was mounted on a rotating/revolving mixer ARE-310 manufactured by Thinky Inc., and then, mixed for 10 minutes to obtain the base layer slurry. On the other hand, when the base layer slurry was dried into a solid and weighed, a dried solid content (solid concentration) of the base layer slurry was about 15 mass%.
A content ratio of each component in the base layer slurry is almost the same as parts by mass of each component based on 100 parts by mass of a base layer formed by removing the solvent from the base layer slurry.

<Coating of Base Layer Slurry>

After respectively preparing an about 8 $\mu$m-thick copper foil as a negative electrode current collector and an about 12 $\mu$m-thick aluminium foil as a positive electrode current collector, the base layer slurry obtained according to the aforementioned method was coated on one surface of each current collector. In each example and comparative example, the base layer slurry applied onto a negative electrode current collector had various compositions as shown in Tables 1 to 4. On the other hand, the base layer slurry applied on the positive electrode current collector was not only common in all the examples and comparative examples but also the same as that applied to a negative electrode current collector in Comparative Example 1. The base layer slurry was coated to have a thickness of 1 $\mu$m thick by using a micro gravure applicator and then, dried at 80 °C for 1 minute to form a 1 $\mu$m-thick base layer on the current collector. On the other hand, in Comparative Example 2 of Table 2, the base layer slurry was immediately hardened, failing in coating the base layer slurry on a negative electrode current collector from the beginning.

<Evaluation of Slurry Viscosity Stability of Base Layer Slurry>

The viscosity of the base layer slurry was evaluated with a B-type viscometer (DV-E viscometer, Brookfield).
The viscosities immediately after the preparation of base layer slurry of Examples 1 to 9 and Comparative Examples 1 and 2 were 100 to 200 mPa-s. In the evaluation of slurry viscosity stability, if the viscosity was less than 5000 mPa·s one day after the preparation of base layer slurry, O was given and if it was 5000 mPa·s or more, × was given. The results are shown in Tables 1 to 4.

<Manufacturing of Negative Electrode>

(Manufacturing of Negative Electrode Mixture Sheet 1)

Powders of natural graphite, artificial graphite, single-layer carbon nanotube, and polytetrafluoroethylene were weighed in a mass ratio of 48.2:48.2:0.1:3.5 and kneaded in a mortar for 10 minutes. After the kneading, a lump-shaped negative electrode mixture was about 100 times passed between two rolls to manufacture a negative electrode mixture sheet with a thickness of about 180 $\mu$m and density of 1.2 g/cm$^3$ to 1.4 g/cm$^3$. In the process of about 100 times passing the lump-shaped negative electrode mixture between the two rolls, a gap of the two rolls was gradually narrowed from 3 mm to finally to about 0.1 mm.
In order to adjust density of a negative electrode mixture sheet obtained in the aforementioned method to 1.6 g/cm$^3$ and a weight per unit area of the negative electrode mixture layer to 17 mg/cm$^2$, the negative electrode mixture sheet was roll-pressed by a hot roll press. The hot roll press was set at a temperature of 75 °C and a rotation speed of 0.5 m/min. After adjusting the roll gap into 30 $\mu$m, the negative electrode mixture sheet formed with a dimension of 3.0 cm×8.0 cm was 3 to 8 times passed in a length direction. In the rolling process, a total pressure was 3 kN, and a linear pressure was 100 kN/m. The manufactured negative electrode mixture sheet was punched to 15.5 $\varphi$ and measured with respect to a weight and a thickness. The obtained weight and thickness were used to calculate negative electrode active mass density and weight per unit area of the negative electrode mixture layer, which were respectively about 1.6 g/cm$^3$ and about 17 mg/cm$^2$.

(Manufacturing of Negative Electrode Mixture Sheet 2)

In the rolling process, the weight per unit area of the negative electrode mixture layer was reduced by increasing the number of rolling the negative electrode mixture sheet passing between rolls. In the rolling process, the number of times passing the negative electrode mixture sheet between the rolls was changed from 25 to 35 to manufacture Negative electrode mixture sheet 2 having negative electrode active mass density of about 1.6 g/cm$^3$ and a weight per unit area of the negative electrode mixture layer of about 10 mg/cm$^2$.

(Manufacturing of Negative Electrode Mixture Sheet 3)

A plurality of the negative electrode mixture sheets manufactured in the rolling process was overlapped and rolled to increase the weight per unit area of the negative electrode mixture layer. Two negative electrode mixture sheets having negative electrode active mass density of about 1.6 g/cm$^3$ and a weight per unit area of the negative electrode mixture layer of about 17.5 mg/cm$^2$ were overlapped in a plane direction and then, rolled by changing the roll gap to 60 $\mu$m to manufacture Negative electrode mixture sheet 3 having negative electrode active mass density of about 1.6 g/cm$^3$ and a weight per unit area of the negative electrode mixture layer of about 35 mg/cm$^2$.

(Adhesion of Negative Electrode Mixture Sheet 1 to Current Collector)

Negative electrode mixture sheet 1 manufactured in the above method was adhered by a hot roll press onto a current collector on which a base layer was formed to manufacture each negative electrode according to Examples 1 to 9 and Comparative Example 1 shown in Table 1.

First, a temperature of the hot roll press was set at 80 °C, and a rotation speed of the rolls was set at 0.5 m/min. After adjusting the roll gap to 45 $\mu$m, each negative electrode mixture sheet was mounted on the base layer coated to be 1 $\mu$m thick on the current collector and then, once passed between the rolls. On the other hand, the rotation speed of the rolls used in each example and comparative example could have an error of about $\pm$ 0.2 m per minute but had no effect on properties of the manufactured negative electrode mixture sheets. In addition, the roll gaps used in each example and comparative example could have an error of about $\pm$10 $\mu$m but had no particular problem. In the adhesion process, a total pressure was 3 kN, and a linear pressure was 100 kN/m. The negative electrodes manufactured in this way were dried at 145 °C for 6 hours in a vacuum-drier. After the vacuum-drying, the negative electrodes were punched to 15.5 $\varphi$ and measured with respect to a weight and a film thickness. The weight and the film thickness were used to calculate negative electrode active mass density and a weight per unit area of the negative electrode mixture layer, which were respectively about 1.6 g/cm$^3$ and about 17.0 mg/cm$^2$.

(Adhesion of Negative Electrode Mixture Sheets 2 and 3 to Current Collector)

Negative electrode mixture sheets 2 and 3 were adhered in the same adhesion process as Negative electrode mixture sheet 1 except that the roll gap was changed. The roll gap was adjusted to be a value obtained by the following calculation formula according to a weight per unit area of the used negative electrode mixture sheet.

$$\text{(Roll gap)} = \text{(Weight per unit area of the negative electrode mixture sheet used)} \div 17 \times 45 \text{ } \mu m$$

<Performance Evaluation Test of Negative Electrode>

(Method for evaluating the adhesion of the negative electrode mixture layer to the negative electrode current collector after immersion in electrolyte solution)

As described above, each of the manufactured negative electrodes was put with an electrolyte solution into an aluminium laminate and then, sealed with a laminator and stored at 60 °C for 3 days in a thermostat. The electrolyte solution was prepared by mixing ethylene carbonate/dimethyl carbonate/ethylmethyl carbonate in a volume ratio of 20/20/40 and dissolving 1.15 M LiPF$_6$ and 1.0 mass% of vinylene carbonate in the mixed solvent. The used electrolyte solution had a volume of 2.0 ml. After 3 days, the aluminium laminate was taken out of the thermostat and moved to a dry room with a dew point of -30 °C. The aluminium laminate was opened to take out a negative electrode plate, and then, the electrolyte solution was wipe off quickly enough therefrom. The negative electrode plate was cut into a rectangle with a width of 25 mm and a length of 80 mm. Subsequently, the surface of the negative electrode on which the mixture layer was formed was bonded to a stainless plate by using a double-sided adhesive tape to prepare a sample for evaluating close contacting property (adhesion). The sample for evaluating close contacting property was mounted on a peeling tester (SHIMAZU EZ-S manufactured by Shimazu Corp.) and measured with respect to peel strength with a length of 60 mm at 180 ° by setting a peeling speed of 100 mm/min.

(Evaluation criteria for the adhesion of the negative electrode mixture layer to the negative electrode current collector after immersion in electrolyte solution)

When the peel strength was 2.0 gf/mm or more, ◎ was given. When the peel strength was 0.5 gf/mm or more and less than 2.0 gf/mm, ○ was given. When the peel strength was less than 0.5 gf/mm, × was given. The results are shown in Table 1.

<Manufacturing of Positive Electrode>

(Manufacturing of Positive Electrode Mixture Sheet 1)

Powders of LiNi$_{0.8}$Co$_{0.1}$Al$_{0.1}$O$_2$, acetylene black, and polytetrafluoroethylene were weighed in a mass ratio of 93.0:3.5:3.5 and kneaded in a mortar for 10 minutes. After the kneading, a lump-shaped positive electrode mixture was about 100 times passed between two rolls to manufacture a positive electrode mixture sheet with a film thickness of about 150 μm and density of 2.9 g/cm$^3$ to 3.1 g/cm$^3$.

In the process of about 100 times passing the lump-shaped positive electrode mixture between the two rolls, a gap between the two rolls was gradually narrowed from 3 mm finally to about 0.1 mm.

In order to adjust positive electrode active mass density of a positive electrode mixture sheet obtained in the above method and a weight per unit area of the positive electrode mixture layer respectively to 3.6 g/cm$^3$ and 30.0 mg/cm$^2$, the positive electrode mixture sheet was rolled by using a hot roll press. A temperature of the hot roll press was set at 40 °C, and a rotation speed of the rolls was set at 0.5 m/min. After adjusting the roll gap to 10 μm, the positive electrode mixture sheet formed with a dimension of 3.0 cm×8.0 cm was twice passed between the rolls in a length direction. Subsequently, the roll gap was adjusted to 5 μm to twice pass the positive electrode mixture sheet. In the rolling process, a total pressure was 3 kN, and a linear pressure was 100 kN/m. When the manufactured positive electrode mixture sheet was punched to 15.5 φ to measure a weight and a film thickness, the film thickness was about 100 μm, positive electrode active mass density was about 3.6 g/cm$^3$, and a weight per unit area was about 30.0 mg/cm$^2$.

(Manufacturing of Positive Electrode Mixture Sheet 2)

In the rolling process, the weight per unit area of the positive electrode mixture layer was reduced by increasing the number of rolling the positive electrode mixture sheet passing between the rolls. In the rolling process, the number of times passing the positive electrode mixture sheet between the rolls was changed from 25 to 35 to manufacture Positive electrode mixture sheet 2 having positive electrode active mass density of about 3.6 g/cm$^3$ and a weight per unit area of the mixture layer of about 18 mg/cm$^2$.

(Manufacturing of Positive Electrode Mixture Sheet 3)

A plurality of the positive electrode mixture sheets manufactured in the rolling process was overlapped and rolled to increase the weight per unit area of the positive electrode mixture layer. Two positive electrode mixture sheets having positive electrode active mass density of about 3.6 g/cm$^3$ and a weight per unit area of the positive electrode mixture layer of about 31 mg/cm$^2$ were overlapped in a plane direction and then, rolled by changing the roll gap to 60 μm to manufacture Positive electrode mixture sheet 3 having positive electrode active mass density of about 3.6 g/cm$^3$ and a weight per unit area of the positive electrode mixture layer of about 62 mg/cm$^2$.

(Adhesion of Positive Electrode Mixture Sheet 1 to Current Collector)

Positive electrode mixture sheet 1 prepared in the above method was adhered by using a hot roll press onto a positive electrode current collector on which a base layer was formed to manufacture a positive electrode. As described in the section of the Coating of Base Layer Slurry, the base layer slurry applied on the positive electrode current collector was not only common in all the examples and comparative examples but also the same as that applied to a negative electrode current collector in Comparative Example 1.

First, a temperature of the hot roll press was set at 60 °C, and a rotation speed of the rolls was set at 0.5 m/min. After adjusting the roll gap to 60 μm, each positive electrode mixture sheet was mounted on the base layer coated to be 1 μm thick on the current collector and then, once passed between the rolls. On the other hand, the rotation speed of the rolls used in each example and comparative example could have an error of about ± 0.2 m per minute but had no effect on properties of the manufactured positive electrode mixture sheets. In addition, the roll gaps used in each example and comparative example could have an error of about ±10 μm but had no particular problem. In the adhesion process, a total pressure was 3 kN, and a linear pressure was100 kN/m. The positive electrodes manufactured in this way were dried at 80 °C for 6 hours in a vacuum-drier. After the vacuum-drying, the positive electrodes were punched to 15.5 φ and measured with respect to a weight and a film thickness. The weight and the film thickness were used to calculate positive electrode active mass density and a weight per unit area of the positive electrode mixture layer, which were respectively about 3.6 g/cm$^3$ and about 30.0 mg/cm$^2$.

(Adhesion of Positive Electrode Mixture Sheets 2 and 3 to Current Collector)

Positive electrode mixture sheets 2 and 3 were adhered in the same adhesion process as Positive electrode mixture sheet 1 except that the roll gap was changed. The roll gap was adjusted to be a value obtained by the following calculation formula according to a weight per unit area of the used positive electrode mixture sheet.

$$(\text{Roll gap}) = (\text{Weight per unit area of the positive electrode mixture sheet used}) \div 30 \times 60 \ \mu m$$

<Preparation of Rechargeable Battery Cell>

After respectively welding a nickel wire and an aluminium wire to each negative electrode according to Examples 1 to 9 and Comparative Example 1 and the positive electrode, a polyethylene porous separator was disposed to stack one sheet of the negative electrode and one sheet of the positive electrode to face each other into an electrode stack structure. Subsequently, the electrode stack structure was housed in an aluminium laminate film with the lead wires externally pulled out, an electrolyte was injected thereinto, and the aluminium laminate film was sealed under a reduced pressure to manufacture a rechargeable battery cell before initial charge. The electrolyte was prepared by dissolving 1.15 M $LiPF_6$ and 1 mass% of vinylene carbonate in a mixed solvent of ethylene carbonate / dimethyl carbonate / fluoroethylene carbonate in a volume ratio of 20/20/40. On the other hand, in order to optimally balance weights per unit area of the positive electrode and the negative electrode in each example and comparative example, Negative electrode mixture sheet 2 and Positive electrode mixture sheet 2 in Examples 1 to 9 and Comparative Examples 1 and 2, Negative electrode mixture sheet 1 and Positive electrode mixture sheet 1 in Examples 3-10, Negative electrode mixture sheet 3 and Positive electrode mixture sheet 3 in Examples 3-11 were respectively used to manufacture rechargeable battery cells.

<Aging of Rechargeable Battery Cell>

The rechargeable battery cells manufactured by using each negative electrode of Examples 1 to 9 and Comparative Example 1 and the positive electrode in the above method were stored at 45 °C for 12 hours in the thermostat before charging and discharging and continuously stored at 25 °C for 24 hours.

The rechargeable battery cells manufactured by using each negative electrode of Examples 1 to 9 and Comparative Example 1 and the positive electrode aged in the above method were connected to a charge and discharge device and then, subjected to formation charge and discharge at 25 °C in the thermostat. The initial charge and discharge were performed by using a charge and discharge program of constant current-charging at 0.1 CA, constant voltage-charging at 0.05 CA, and constant current-discharging at 0.1 CA with a charge cut-off voltage of 4.25 V and a discharge cut-off voltage of 2.8 V. The 2nd and 3rd charges and discharges were respectively performed by using a charge and discharge program of constant current-charging at 0.2 CA, constant voltage-charging at 0.05 CA, and constant current-discharging at 0.2 CA with a charge cut-off voltage of 4.25 V and a discharge cut-off voltage of 2.8 V.

<Rate Characteristic Test of Rechargeable Battery Cell>

The rechargeable battery cells after the above formation charge and discharge were constant current-charged at 0.33 CA and constant voltage-charged at 0.05CA with a charge cut-off voltage of 4.25 V and then, constant current discharged at 2 CA with a discharge cut-off voltage of 2.8 V. When full-charge capacity of the cells, which were charged at 0.33 CA, was determined to be SOC 100%, a discharge voltage where discharge capacity of the cells, which were constant current-discharged at 2 CA, reached SOC 10% was checked. When the discharge voltage checked in the above method was greater than or equal to 3.85 V, ◎ was given, when the discharge voltage was greater than or equal to 3.75 V and less than 3.85 V, ∘ was given, when the discharge voltage was greater than or equal to 3.5 V and less than 3.75 V, △ was given, and when the discharge voltage was less than 3.5 V, × was given.

The results are shown in Table 1.

(Table 1)

| | Base layer composition (dried product, part by mass) | | | Dispersa nt neutraliz ation degree (mol%) | Base layer film thickn ess ($\mu$m) | Adhesi on after immer sion in electrol yte solutio n | 2 CA discha rge voltag e | Slurry viscosity stability |
|---|---|---|---|---|---|---|---|---|
| | Bind er | Carb on mate rial | Disper sant | | | | | |
| Ex. 1 | 70 | 21 | 9 | 0 | 1 | ○ | ◎ | ○ |
| Ex. 2 | 78 | 15.4 | 6.6 | 0 | 1 | ◎ | ◎ | ○ |

(continued)

| | Base layer composition (dried product, part by mass) | | | Dispersa nt neutraliz ation degree (mol%) | Base layer film thickn ess ($\mu$m) | Adhesi on after immer sion in electrol yte solutio n | 2 CA discha rge voltag e | Slurry viscosity stability |
|---|---|---|---|---|---|---|---|---|
| | Bind er | Carb on mate rial | Disper sant | | | | | |
| Ex. 3 | 80 | 14 | 6 | 0 | 1 | ◎ | ◎ | ○ |
| Ex. 4 | 80 | 14 | 6 | 10 | 1 | ◎ | ◎ | ○ |
| Ex. 5 | 80 | 14 | 6 | 25 | 1 | ◎ | ○ | ○ |
| Ex. 6 | 82.5 | 12.2 5 | 5.25 | 0 | 1 | ◎ | ○ | ○ |
| Ex. 7 | 85 | 10.5 | 4.5 | 0 | 1 | ◎ | ○ | ○ |
| Ex. 8 | 87.5 | 8.75 | 3.75 | 0 | 1 | ◎ | ○ | ○ |
| Ex. 9 | 90 | 7 | 3 | 0 | 1 | ◎ | ○ | ○ |
| Com p.Ex. 1 | 60 | 28 | 12 | 0 | 1 | × | ◎ | ○ |

< Consideration of Evaluation Results >

Referring to the results of Table 1, Examples 1 to 9 having a base layer with a binder content of 70 mass% or more exhibited a sufficiently large weight per unit area of a negative electrode mixture layer of 17 mg/cm$^2$, and even if the base layer had a sufficiently thin thickness of 1 $\mu$m thick, compared with Comparative Example 1, the negative electrodes with improved close contacting properties after dipping in the electrolyte solution were provided.

In addition, although not shown in Table 1, the negative electrodes of Examples 1 to 9 exhibited a large enough close contacting force before dipping in the electrolyte solution of 3 Gf/mm or more. Furthermore, when the base layer was set to have a binder content of 90 mass% or less, close contacting property of the negative electrode mixture layer to the current collector was not only sufficiently increased but also rate characteristics of the cells were maintained within an appropriate range.

Peeling and falling off of the negative electrode mixture layer after dipping in the electrolyte solution could cause a decrease in electrical capacity of the rechargeable battery cells, a decrease in the rate performance, and a decrease in cycle-life characteristics. In this regard, the base layer used in Examples 1 to 9 of the present invention, as described above, had sufficiently large close contacting property after dipping in the electrolyte solution and thus may be advantageous in terms of improving electrical capacity, rate performance, and cycle-life characteristics of rechargeable battery cells.

(Table 2)

| | Base layer composition (dried product, part by mass) | | | Dispersant neutralization degree (mol%) | Slurry viscosity stability |
|---|---|---|---|---|---|
| | Binder | Carbon material | Dispersant | | |
| Ex. 3 | 80 | 14 | 6 | 0 | ○ |
| Ex. 4 | 80 | 14 | 6 | 10 | ○ |
| Ex. 5 | 80 | 14 | 6 | 25 | ○ |
| Comp. Ex. 2 | 80 | 14 | 6 | 50 | × |

As shown in Table 2, in Examples 3 to 5, compared with Comparative Example 2, a dispersant exhibited a neutralization degree of 25% or less, which confirmed that the dispersant was sufficiently adsorbed to a carbon material

**EP 4 407 717 A1**

to generate a sufficiently large repulsive force between particles of the carbon material, resultantly sufficiently dispersing the carbon material in the base layer slurry.

In addition, when a base layer with the same composition as in Example 3 was formed to have a film thickness of greater than or equal to 0.5 $\mu$m and less than or equal to 5 $\mu$m, the evaluation results are shown in Table 3.

(Table 3)

| | Base layer composition (dried product, part by mass) | | | Dispersa nt neutraliza tion degree (mol%) | Base layer film thickn ess ($\mu$m) | Adhesi on after immers ion in electrol yte solution | 2 CA dischar ge voltage | Slurry viscos ity stabilit y |
|---|---|---|---|---|---|---|---|---|
| | Bind er | Carb on mater ial | Dispers ant | | | | | |
| Ex. 3 | 80 | 14 | 6 | 0 | 1 | ◎ | ◎ | ○ |
| Ex. 3-2 | 80 | 14 | 6 | 0 | 0.5 | ◎ | ◎ | ○ |
| Ex. 3-3 | 80 | 14 | 6 | 0 | 1.5 | ◎ | ◎ | ○ |
| Ex. 3-4 | 80 | 14 | 6 | 0 | 2 | ◎ | ◎ | ○ |
| Ex. 3-5 | 80 | 14 | 6 | 0 | 5 | ◎ | ◎ | ○ |

Referring to Table 3, even with a very thin film thickness of greater than or equal to 0.5 $\mu$m, less than or equal to 5 $\mu$m and sufficiently large close contacting property after dipping in the electrolyte solution was obtained. In addition, even when the thickness was changed to 5 $\mu$m, there was no effect on a discharge voltage of the battery cells.

When the base layer with the same composition as in Example 3 was used, but a weight per unit area of the negative electrode mixture layer was changed, the evaluation results are shown in Table 4.

**15**

(Table 4)

| | Base layer composition (dried product, part by mass) | | | Disper sant neutrali zation degree (mol%) | Base layer film thicknes s (μm) | Weight per unit area of mixture layer (mg/cm$^2$ ) | Adhesion after immersio n in electrolyt e solution | 2 CA discharg e voltage | Slurry viscosi ty stabilit y |
|---|---|---|---|---|---|---|---|---|---|
| | Binder | Carbon materi al | Dispe rsant | | | | | | |
| Ex. 3 | 80 | 14 | 6 | 0 | 1 | 17 | ◎ | ◎ | ○ |
| Ex. 3-10 | 80 | 14 | 6 | 0 | 1 | 10 | ◎ | ◎ | ○ |
| Ex. 3-11 | 80 | 14 | 6 | 0 | 1 | 35 | ◎ | ◎ | ○ |

Referring to Table 4, even when the weight per unit area of the negative electrode mixture layer was greater than or equal to 10 mg/cm$^2$ and less than or equal to 35 mg/cm$^2$, sufficient close contacting property after dipping in the electrolyte solution was obtained.

While this invention has been described in connection with what is presently considered to be practical example embodiments, it is to be understood that the invention is not limited to the disclosed embodiments. On the contrary, it is intended to cover various modifications and equivalent arrangements included within the scope of the appended claims.

**Claims**

1.  An electrode for a non-aqueous electrolyte rechargeable battery, comprising

    a current collector;
    an electrode mixture layer; and
    a conductive base layer between the current collector and the electrode mixture layer,
    wherein the base layer includes at least a styrene-acrylic acid ester-based copolymer, a carbon material, and poly(meth)acrylic acid,
    a content of the styrene-acrylic acid ester-based copolymer in the base layer is greater than or equal to about 70 mass% and less than or equal to about 90 mass%,
    in the poly(meth)acrylic acid, carboxyl groups included in the poly(meth)acrylic acid are not neutralized, or a proportion of neutralized carboxyl groups, neutralized by alkali metal ions, among the carboxyl groups is less than or equal to about 25%, and
    a weight per unit area of the electrode mixture layer per one surface of the current collector is greater than or equal to about 10 mg/cm$^2$ and less than or equal to about 35 mg/cm$^2$.

2.  The electrode as claimed in claim 1, wherein a content of the styrene-acrylic acid ester-based copolymer in the base layer is greater than about 77.5 mass% and less than or equal to about 90 mass%.

3.  The electrode as claimed in claim 1, wherein
    a content of the styrene-acrylic acid ester-based copolymer in the base layer is greater than or equal to about 78 mass% and less than or equal to about 85 mass%.

4.  The electrode as claimed in claim 1, wherein
    a content of the styrene-acrylic acid ester-based copolymer in the base layer is greater than or equal to about 80 mass% and less than or equal to about 85 mass%.

5.  The electrode as claimed in any one of claims 1 to 4, wherein
    the base layer has a thickness of greater than or equal to about 0.5 μm and less than or equal to about 5 μm.

6.  The electrode as claimed in claim 5, wherein
    the base layer has a thickness of greater than or equal to about 0.5 μm and less than or equal to about 2 μm.

7.  The electrode as claimed in any one of claims 1 to 6, wherein
    the styrene-acrylic acid ester-based copolymer has a glass transition temperature of greater than or equal to about -20 °C and less than or equal to about 20 °C.

8.  The electrode as claimed in any one of claims 1 to 7, wherein
    the electrode mixture layer includes greater than or equal to about 0.5 mass% and less than or equal to about 10 mass% of polytetrafluoroethylene.

9.  The electrode as claimed in any one of claims 1 to 8, wherein
    the carboxyl group in the poly(meth)acrylic acid is not neutralized, or a proportion of the neutralized carboxyl group in the poly(meth)acrylic acid is greater than about 0% and less than or equal to about 10%.

10. The electrode as claimed in any one of claims 1 to 9, wherein
    the carbon material includes at least one of furnace black, channel black, thermal black, ketjen black, and acetylene black.

11. A non-aqueous electrolyte rechargeable battery, comprising
    a positive electrode, a negative electrode, a separator between the positive electrode and negative electrode, and an electrolyte, wherein at least one of the positive electrode and the negative electrode is the electrode for a non-aqueous electrolyte rechargeable battery as claimed in any one of claims 1 to 10.

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 4 254 567 A2 (SAMSUNG SDI CO LTD [KR]) 4 October 2023 (2023-10-04) * Examples 20-25; Comparative Examples 2-4; claims 1,7 * | 1-11 | INV. H01M4/62 H01M4/66 H01M10/0525 |
| A | EP 2 988 351 A1 (TOYO INK SC HOLDINGS CO LTD [JP]; TOYOCOLOR CO LTD [JP]) 24 February 2016 (2016-02-24) * paragraph [0168] - paragraph [0171]; claim 1 * | 1-11 | |
| A | US 2013/157129 A1 (UEMURA TAICHI [JP] ET AL) 20 June 2013 (2013-06-20) * the whole document * | 1-11 | |
| A | CN 111 710 832 A (JIANGSU ZHUOGAO NEW MAT TECH CO LTD) 25 September 2020 (2020-09-25) * the whole document * | 1-11 | |

**TECHNICAL FIELDS SEARCHED (IPC)**

H01M

The present search report has been drawn up for all claims

| Place of search | Date of completion of the search | Examiner |
|---|---|---|
| Munich | 12 June 2024 | Steinreiber, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    ...................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 3699

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2024

| Patent document cited in search report | | Publication date | Patent family member(s) | | Publication date |
|---|---|---|---|---|---|
| EP 4254567 | A2 | 04-10-2023 | EP | 4254567 A2 | 04-10-2023 |
| | | | US | 2023317956 A1 | 05-10-2023 |
| EP 2988351 | A1 | 24-02-2016 | CN | 105144435 A | 09-12-2015 |
| | | | EP | 2988351 A1 | 24-02-2016 |
| | | | HU | E047814 T2 | 28-05-2020 |
| | | | JP | 5935820 B2 | 15-06-2016 |
| | | | JP | 2015026595 A | 05-02-2015 |
| | | | KR | 20150144769 A | 28-12-2015 |
| | | | WO | 2014171415 A1 | 23-10-2014 |
| US 2013157129 | A1 | 20-06-2013 | CN | 103081192 A | 01-05-2013 |
| | | | CN | 103155068 A | 12-06-2013 |
| | | | EP | 2613386 A1 | 10-07-2013 |
| | | | EP | 2613387 A1 | 10-07-2013 |
| | | | JP | 5507696 B2 | 28-05-2014 |
| | | | JP | 5834008 B2 | 16-12-2015 |
| | | | JP | WO2012029618 A1 | 28-10-2013 |
| | | | JP | WO2012029858 A1 | 31-10-2013 |
| | | | KR | 20130055004 A | 27-05-2013 |
| | | | KR | 20130107291 A | 01-10-2013 |
| | | | TW | 201224084 A | 16-06-2012 |
| | | | TW | 201224085 A | 16-06-2012 |
| | | | US | 2013157129 A1 | 20-06-2013 |
| | | | US | 2013164614 A1 | 27-06-2013 |
| | | | WO | 2012029618 A1 | 08-03-2012 |
| | | | WO | 2012029858 A1 | 08-03-2012 |
| CN 111710832 | A | 25-09-2020 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020196372 A